Europäisches Patentamt

European Patent Office

Office européen des brevets

(19)

(11) Numéro de publication : **0 119 885**
**B1**

(12) **FASCICULE DE BREVET EUROPÉEN**

(45) Date de publication du fascicule du brevet :
04.03.87

(51) Int. Cl.⁴ : **B 01 J 31/08, C 10 G 27/10**

(21) Numéro de dépôt : **84400300.4**

(22) Date de dépôt : **15.02.84**

(54) **Procédé de préparation d'un catalyseur d'oxydation des mercaptans en disulfures et application de ce catalyseur à l'adoucissement des distillats pétroliers.**

(30) Priorité : **18.03.83 FR 8304628**

(43) Date de publication de la demande :
**26.09.84 Bulletin 84/39**

(45) Mention de la délivrance du brevet :
**04.03.87 Bulletin 87/10**

(84) Etats contractants désignés :
**BE DE GB IT NL**

(56) Documents cités :
**EP-A- 0 091 845
CH-A- 410 260
FR-A- 1 391 934
FR-A- 2 202 726
FR-A- 2 320 769
US-A- 2 723 222
US-A- 2 792 334
US-A- 4 298 502**

(73) Titulaire : **INSTITUT FRANCAIS DU PETROLE**
**4, Avenue de Bois-Préau**
**F-92502 Rueil-Malmaison (FR)**

(72) Inventeur : **Franck, Jean-Pierre**
**24, avenue Ivan Tourgueneff**
**F-78380 Bougival (FR)**
Inventeur : **Mimoun, Hubert**
**34, rue Hippolyte Bisson**
**F-92500 Rueil-Malmaison (FR)**
Inventeur : **Marty, Claude**
**66, Rue Guillemard**
**F-76600 Le Havre (FR)**

Jouve, 18, rue St-Denis, 75001 Paris, France

EP 0 119 885 B1

**0 119 885**

## Description

La présente invention est relative à la préparation d'un catalyseur pour l'adoucissement des fractions pétrolières par transformation des mercaptans en disulfures.

On sait la grande application qui est faite industriellement de la propriété que possèdent des chélates de certains métaux (cuivre, cobalt, vanadium, nickel) de catalyser la transformation des mercaptans en disulfures en présence d'oxygène. Cette propriété est mise en œuvre, par exemple avec la phtalocyanine de cobalt, pour adoucir, en milieu aqueux alcalin, l'essence naturelle, les essences provenant de la distillation ou du craquage, le naphta, le kérosène, l'essence d'aviation, les solvants de toutes compositions.

Il est également possible de procéder à cet adoucissement en utilisant un catalyseur d'oxydation fixé sur un support insoluble dans la soude et les hydrocarbures : un tel procédé est décrit dans le brevet français 1 301 844, selon lequel la charge hydrocarbonée est mise en contact avec un lit fixe de phtalocyanine de cobalt sur charbon actif, en présence d'air et d'un réactif alcalin.

Cette dernière technique présente cependant de nombreux inconvénients, en particulier du fait des difficultés liées à l'imprégnation du support avec le chélate et à la tendance de celui-ci à se désorber, ce qui conduit à des opérations coûteuses de réimprégnation du support.

Il est en effet connu que la plupart des catalyseurs placés sur un lit fixe de charbon actif, ou de tout autre support tel que l'alumine ou la silice, ne sont pas toujours suffisamment liés audit support et qu'ils peuvent, par conséquent, être entraînés, dans certaines conditions, hors du réacteur avec les produits de la réaction.

Les techniciens qui se sont penchés sur ce problème du lit fixe ont donc cherché à rendre les espèces catalytiquement actives plus fermement solidaires de leur support, et ils ont proposé dans ce but, l'utilisation comme support de diverses résines.

C'est ainsi que le brevet américain 3 396 123 décrit la préparation d'un nouveau type de support, par chauffage d'un mélange de résine thermoplastique et de charbon actif.

Le brevet américain 4 145 435 décrit l'application à d'autres domaines réactionnels et, en particulier, à celui de la catalyse homogène, de divers types de complexes métalliques fixés sur résines échangeuses d'ions.

La demande de brevet français 2 202 726, décrit l'utilisation, comme catalyseur d'adoucissement, de métaux à l'état d'ions ou à l'état de complexes, fixés par imprégnation — et seulement par imprégnation — sur une résine échangeuse d'ions du type poly 4-vinylpyridine réticulée avec du divinylbenzène. Le composé métallique utilisé est, par exemple, le naphténate de cobalt.

On a maintenant découvert qu'il est possible de fixer directement des ions complexes métalliques sur des résines échangeuses d'ions, par échange et non plus par imprégnation.

L'invention a par conséquent pour objet un procédé de préparation d'un catalyseur d'oxydation des mercaptans en disulfures, constitué par au moins un complexe métallique (le métal étant choisi dans le groupe constitué par le cobalt, le nickel, le cuivre et le zinc) de l'acide éthylène diamine tétracétique ou de son sel de sodium, ledit complexe étant fixé directement sur une résine basique échangeuse d'anions, le procédé étant caractérisé en ce que l'on opère en deux étapes :

(a) formation dudit complexe métallique de l'acide éthylène diamine tétracétique ou de son sel de sodium par réaction entre d'une part un sel d'un métal choisi dans le groupe constitué par le nickel, le cuivre, le zinc et le cobalt et d'autre part l'acide éthylène diamine tétracétique ou son sel de sodium.

(b) échange du complexe ainsi formé sur une résine basique échangeuse d'anions.

Les catalyseurs ainsi préparés sont constitués en particulier par des complexes de métaux comprenant notamment le cobalt, le zinc, le nickel et le cuivre, avec de l'acide éthylène diamine tétracétique ou son sel de sodium fixés sur une résine échangeuse basique d'anions. Ces catalyseurs permettent d'obtenir l'adoucissement des mercaptans contenus dans les fractions pétrolières dans des conditions particulièrement intéressantes.

La préparation desdits complexes métalliques décrite dans la présente demande de brevet ne nécessite pas de techniques particulières car ces catalyseurs ont déjà été décrits, ainsi que leur utilisation pour l'adoucissement d'hydrocarbures dans la demande EP-A-0 091 845 publiée le 19.10.83 et qui en conséquence fait partie de l'état de la technique selon l'Art. 54 (3) CBE. Cependant, lesdits catalyseurs sont préparés selon une technique, plus complexe industriellement, comportant (a) un échange sur une résine acide (par exemple de type AMBERLYST 15) du cation que l'on veut fixer (cobalt, nickel, zinc ou cuivre) suivi d'un lavage à l'eau distillée, puis (b) un passage sur la résine obtenue d'une solution d'éthylène diamine tétracétique ou de préférence de son sel de sodium.

Dans la présente invention ledit complexe métallique est préparé, par exemple, par mélange d'une solution aqueuse d'un sel inorganique de métal choisi et d'une solution d'éthylène diamine tétracétique par exemple sous sa forme sodée que l'on trouve dans le commerce.

Ledit complexe ayant été préparé, on procède à son échange avec les anions d'une résine basique.

Un grand nombre de résines basiques échangeuses d'anions sont utilisables conformément à l'invention, en particulier celles qui comprennent au moins un groupe fonctionnel amine primaire, secondaire et tertiaire ou ammonium quaternaire. On trouve un certain nombre de ces résines dans le

2

**0 119 885**

commerce, notamment sous les marques déposées AMBERLYST, AMBERLITE ou DUOLITE.

La réaction d'échange avec une résine comprenant par exemple au moins un groupe fonctionnel ammonium quaternaire peut s'écrire suivant le schéma :

$$2 [R - N^+(CH_3)_3]X^- + MY^{2-} \rightarrow [R - N^+(CH_3)_3]_2MY^{2-} + 2X^-$$

où $X^-$ est un ion halogénure (par exemple un ion chlorure), où $MY^{2-}$ est ledit complexe, M étant le métal choisi (Co, Ni, Zn, Cu) et Y étant un reste éthylène diamine tétracétique, et où R est un groupe par exemple du type styrène divinylbenzène.

L'adoucissement en disulfures des mercaptans contenus dans les fractions pétrolières, à l'aide du catalyseur conforme à l'invention, peut être effectué selon l'un ou l'autre des procédés conventionnels rappelés ci-après, à titre d'exemple :

Ainsi dans un premier procédé, l'adoucissement d'une essence est réalisé avec injection en continu d'une solution aqueuse de soude ou de potasse dans le réacteur ; et dans un autre procédé, l'adoucissement d'une essence est réalisé sans appoint de soude dans l'essence, c'est-à-dire strictement en milieu anhydre.

On utilise des lits fixes de résines à base de l'acide éthylène diamine tétracétique métallique préparées selon la présente invention, mélangées directement avec de la soude ou de la potasse solide dans une proportion de 5 à 25 % en poids de potasse ou de soude anhydre.

Dans la mise en œuvre de la réaction d'adoucissement, la température de réaction n'a pas un effet très critique. On peut opérer à température ambiante, mais il est également possible de mener la réaction à des températures plus élevées, sans toutefois, de préférence, dépasser des températures de l'ordre de 120 °C. D'autre part, la pression requise est comprise entre environ 1 et 50 bars et, de préférence, entre environ 2 et 30 bars.

L'air est l'agent d'oxydation le plus approprié. Tout autre agent oxydant, tel que l'oxygène à l'état pur, est cependant utilisable, de même que tout autre gaz ou mélange de gaz contenant de l'oxygène. Ce dernier peut être introduit dans le réacteur en quantités stœchiométriques ; il est parfois préférable de l'utiliser en excès.

Les exemples suivants illustrent la présente invention.

### Exemple 1

Pour la préparation des complexes métalliques de l'acide éthylène diamine tétracétique (ci-après désigné E.D.T.A.), on utilisera successivement les sels inorganiques suivants :

$CoCl_2$, $6H_2O$
$NiCl_2$, $6H_2O$
$CuCl_2$, $2H_2O$ et
$ZnCl_2$

A une solution de 0,062 mole de chacun de ces sels dans 50 ml d'eau, on ajoute 0,062 mole d'un sel de sodium de l'acide éthylène diamine tétracétique $Na_2$ E.D.T.A. dissous dans 100 ml d'eau. La solution résultante est ajustée à pH = 7 à l'aide d'acide chlorhydrique puis est chauffée vers 95 °C. On ajoute ensuite de l'éthanol absolu jusqu'à obtention d'un léger trouble. Après refroidissement dans la glace, le complexe métallique précipite. Il est recristallisé dans un mélange eau-alcool.

On obtient ainsi plusieurs solutions de complexes métalliques A, B, C et D désignées arbitrairement.

A : E.D.T.A., Cobalt
B : E.D.T.A., Nickel
C : E.D.T.A., Cuivre
D : E.D.T.A., Zinc

On charge alors quatre colonnes de rapport hauteur/diamètre = 12 avec 80 grammes d'AMBERLYST A 26 humide (60 % d'eau). Cette résine se présente sous forme chlorure.

Sur l'une de ces colonnes, on fait passer 800 cm³ d'une solution à 5 % en poids du complexe A (E.D.T.A., cobalt). La solution sortante de pH 7 est incolore, tandis que la résine se colore en rouge. Un test au nitrate d'argent, pratiqué sur l'effluent sortant, met en évidence la présence d'ions chlorures.

On rince ensuite la résine jusqu'à obtenir des eaux de lavage incolores (pendant huit heures) et on procède enfin à un séchage pendant dix-huit heures, à 40 °C, sous une pression de 20 mm de mercure (2 666 Pa).

Sur une deuxième colonne, on fait passer 800 cm³ d'une solution à 5 % en poids du complexe B (E.D.T.A., nickel) et on opère comme précédemment.

Dans les troisième et quatrième colonnes, avant d'y faire passer les solutions C et D, on procède d'abord à l'échange des ions chlorures à l'aide d'une solution de soude 0,5 N (2 litres), puis on rince la résine jusqu'à pH neutre.

3

On fait alors passer sur la troisième colonne, 800 cm³ d'une solution à 5 % en poids du complexe C (E.D.T.A., cuivre).

La durée du passage est d'environ huit heures.

La résine est ensuite lavée avec de l'eau distillée, afin d'éliminer toutes traces de cuivre non fixé, puis elle est séchée dix-huit heures, à 40 °C, sous une pression de 20 mm de mercure (2 666 Pa).

On procède de la même façon, avec la quatrième colonne pour le passage du complexe D (E.D.T.A., zinc).

## Exemple 2

Cet exemple a pour objet l'adoucissement d'une essence sur un catalyseur à base de cuivre, sans appoint de soude dans l'essence.

La résine au cuivre préparée selon l'Exemple 1 est mélangée avec de la potasse solide dans un rapport pondéral de 90 % de résine et 10 % de potasse broyée. Elle est ensuite placée dans un réacteur tubulaire.

Les essais ont été réalisés sur une charge d'essence catalytique synthétique composée de 50 % en poids d'heptane, 30 % d'heptène et 20 % de benzène, et contenant 1 000 ppm de tertiobutylmercaptan.

La charge à adoucir est placée dans un réservoir qui alimente le réacteur, avec un appoint d'air.

Les conditions opératoires de la réaction sont les suivantes :

| | |
|---|---|
| — volume du catalyseur | 20 cm³ |
| — pression relative | 0,5 bar |
| — température | 30 °C |
| — volume d'air par gramme de mercaptan | 6 Nl/g |
| — vitesse spatiale horaire de la charge (volume de charge passant par heure sur une unité de volume de catalyseur) | 1 |

Une fois traité dans le réacteur, l'effluent est séparé de l'air qu'il contient, dans un séparateur. L'analyse de cet effluent montre que les mercaptans sont transformés en disulfures pendant 400 heures, avec un taux d'adoucissement supérieur à 95,5 %.

## Exemple 3

Cet exemple concerne le traitement d'une charge industrielle.

L'essai est réalisé dans les mêmes conditions que pour l'exemple précédent sur une charge industrielle composée d'un mélange 50/50 (en volume) d'essence légère et d'essence lourde issue d'un craqueur catalytique.

Cette charge, dont la densité à 15 °C est de 0,779, contient 34,1 % de composés aromatiques, 27,2 % d'oléfines et 38,7 % d'hydrocarbures saturés ; elle contient en outre environ 800 ppm de phénols, 200 à 400 ppm de soufre « mercaptan » et 1 000 à 2 000 ppm de soufre total.

Les conditions opératoires sont les suivantes :

| | |
|---|---|
| — volume du catalyseur | 20 cm³ |
| — pression relative | 0,5 bar |
| — température | 30 °C |
| — volume d'air par gramme de mercaptan | 2 Nl/g |
| — vitesse spatiale horaire de la charge | 1 à 4 |

Malgré les variations de vitesse spatiale horaire imposées, l'essence est adoucie pendant 500 heures, pendant lesquelles la concentration en phénols est descendue à 28 ppm.

## Exemple 4

Cet exemple se rapporte à l'adoucissement d'une charge industrielle sur un catalyseur à base de cobalt.

On traite une charge analogue à celle de l'Exemple 3, dans les mêmes conditions que dans cet exemple, avec un catalyseur à base de cobalt préparé selon l'Exemple 1 et mélangé avec 10 % en poids de potasse solide.

L'essence adoucie présente les caractéristiques suivantes, comparées à la charge :

(Voir tableau page 5)

4

# 0 119 885

|  | CHARGE | EFFLUENT |
|---|---|---|
| Soufre total (ppm) | 2 000 | 1 970 |
| Mercaptans(S)(ppm) | 400 | - |
| Phénols (ppm) | 900 | 600 |
| Couleur ASTM | $\leqslant 0,5$ | $\leqslant 0,5$ |
| Cobalt (ppm) | 0 | 0 |
| Gommes (mg/100ml) |  |  |
| - non lavées : | 45 | 10 |
| - lavées : | 39 | 4 |

## Exemple 5

Cet exemple est relatif à l'adoucissement d'une essence sur un catalyseur à base de zinc, préparé de façon analogue à celle du catalyseur au cuivre.

L'essence est une essence industrielle contenant 400 ppm de soufre mercaptan que l'on traite dans des conditions similaires à celles de l'Exemple 3.

Les conditions opératoires sont les suivantes :

— température 30 à 50 °C
— pression relative 0,5 bar
— volume d'air par gramme de soufre mercaptan 2,4 Nl/g
— vitesse spatiale horaire de la charge 1

On observe que la charge effluente ne contient pas de zinc, et qu'elle est adoucie pendant plus de cinquante heures à des teneurs en mercaptans inférieures à 9 ppm.

## Exemple 6

Cet exemple a pour objet l'adoucissement d'une essence industrielle sur un catalyseur à base de nickel.

L'essence est la même que dans l'exemple précédent et elle est traitée à l'aide d'un catalyseur à base de nickel, préparé de façon analogue à celle du catalyseur au cobalt.

Les conditions opératoires sont les suivantes :

— température 30 °C
— pression relative 0,5 bar
— volume d'air par gramme de soufre mercaptan 2,7 Nl/g
— vitesse spatiale horaire de la charge 1

La charge effluente ne contient pas non plus de nickel : elle est adoucie pendant plus de soixante-dix heures à des teneurs inférieures à 2 ppm de mercaptans.

## Exemple 7

Cet exemple concerne l'adoucissement d'une charge sur une résine avec appoint de soude.

Une résine à base de cobalt est préparée conformément à l'Exemple 1 puis mélangée avec de la potasse solide, dans un rapport pondéral à 90 % de résine et 10 % de potasse broyée. Le catalyseur est placé en lit fixe dans un réacteur tubulaire.

On envoie dans ce réacteur, une charge de même type que celle de l'Exemple 3, dans laquelle la quantité de soufre total est de 1 074 ppm.

Pendant toute la durée de l'injection, on envoie en continu 200 ppm, par rapport à la charge, d'une solution de soude à 3,4 % en poids dans un mélange 75/25 en poids de méthanol et d'eau.

Les conditions et résultats de cet essai sont donnés dans le tableau suivant :

(Voir tableau page 6)

5

**0 119 885**

| TEMPS (heures) | T°C | P (bar) | VITESSE SPATIALE HORAIRE. | N1 AIR | |
|---|---|---|---|---|---|
| | | | | g de S.RSH | charge(ppm) |
| 0 - 50 | 30 | 8 | 1 | 2,2 | 200 |
| 50 - 290 | 30 | 8 | 2 | 3,4 | 200 |
| 290 - 310 | 30 | 20 | 1,5 | 2,2 | 266 |
| 310 - 450 | 50 | 20 | 1,5 | 2,2 | 266 |

Pendant les 250 premières heures de l'expérimentation, la concentration en mercaptan dans les effluents est inférieure à 2,5 ppm de soufre mercaptan. Cette concentration augmente légèrement par la suite, sans toutefois dépasser 5 ppm après 450 heures de fonctionnement.

## Revendications

1. Procédé de préparation d'un catalyseur d'oxydation des mercaptans en disulfures, constitué par au moins un complexe métallique (le métal étant choisi dans le groupe constitué par le cobalt, le nickel, le cuivre et le zinc) de l'acide éthylène diamine tétracétique ou de son sel de sodium, ledit complexe étant fixé directement sur une résine basique échangeuse d'anions, le procédé étant caractérisé en ce que l'on opère en deux étapes :
(a) formation dudit complexe métallique de l'acide éthylène diamine tétracétique ou de son sel de sodium par réaction entre d'une part un sel d'un métal choisi dans le groupe constitué par le nickel, le cuivre, le zinc et le cobalt et d'autre part l'acide éthylène diamine tétracétique ou son sel de sodium.
(b) échange du complexe ainsi formé sur une résine basique échangeuse d'anions.
2. Procédé selon la revendication 1, caractérisé en ce que la résine basique échangeuse d'anions possède au moins un groupement fonctionnel amine ou un groupement fonctionnel ammonium quaternaire.

## Claims

1. A process for manufacturing a catalyst, for oxidizing mercaptans to disulfides, consisting of at least one metal complex (the metal being selected from the group consisting of cobalt, nickel, copper and zinc) of ethylene diamine tetracetic acid or its sodium salt, said complex being directly fixed on a basic anion exchange resin, the process being characterized by a two-step operation of :
(a) forming said metal complex of ethylene diamine tetracetic acid or of its sodium salt by reacting a salt of metal selected from the group consisting of nickel, copper, zinc and cobalt with ethylene diamine tetracetic acid or its sodium salt.
(b) exchanging the resultant complex on a basic anion exchange resin.
2. A process according to claim 1, characterized in that the basic anion exchange resin has at least one amine group or a quaternary ammonium group.

## Patentansprüche

1. Verfahren zur Herstellung eines Katalysators zur Oxidation von Merkaptanen in Disulfide, der aus mindestens einem Metallkomplex (wobei das Metall aus der Gruppe bestehend aus Kobalt, Nickel, Kupfer und Zink ausgewählt ist) von Äthylendiamintetraessigsäure oder deren Natriumsalz besteht, wobei der Komplex direkt an ein basisches Anionenaustauscherharz gebunden wird, dadurch gekennzeichnet, daß man zweistufig wie folgt vorgeht :
(a) Bildung des Metallkomplexes von Äthylendiamintetraessigsäure oder von deren Natriumsalz durch Umsetzung von einerseits einem Salz eines Metalls, das ausgewählt ist aus der Gruppe bestehend aus Nickel, Kupfer, Zink und Kobalt, und andererseits Äthylendiamintetraessigsäure oder von derem Natriumsalz,
(b) Austausch des auf diese Weise gebildeten Komplexes an einem basischen Anionenaustauscherharz.
2. Verfahren nach Anspruch 1, dadurch gekennzeichnet, daß das basische Anionenaustauscherharz mindestens eine funktionelle Aminogruppe oder eine funktionelle quaternäre Ammoniumgruppe aufweist.

6